(19) Europäisches Patentamt
European Patent Office
Office européen des brevets

(11) **EP 3 780 841 A1**

(12) **EUROPEAN PATENT APPLICATION**
published in accordance with Art. 153(4) EPC

(43) Date of publication:
**17.02.2021 Bulletin 2021/07**

(51) Int Cl.:
**H04W 72/12** (2009.01)  **H04W 72/04** (2009.01)

(21) Application number: **19781056.7**

(86) International application number:
**PCT/KR2019/004130**

(22) Date of filing: **08.04.2019**

(87) International publication number:
**WO 2019/194663 (10.10.2019 Gazette 2019/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2018 KR 20180040255**
**06.04.2018 KR 20180040260**

(71) Applicant: **LG Electronics Inc.**
**Yeongdeungpo-gu**
**Seoul 07336 (KR)**

(72) Inventors:
• **BAE, Duckhyun**
**Seoul 06772 (KR)**
• **LEE, Hyunho**
**Seoul 06772 (KR)**
• **HWANG, Daesung**
**Seoul 06772 (KR)**
• **KIM, Youngtae**
**Seoul 06772 (KR)**
• **YI, Yunjung**
**Seoul 06772 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(54) **METHOD FOR TRANSMITTING UPLINK CONTROL INFORMATION IN WIRELESS COMMUNICATION SYSTEM, AND DEVICE THEREFOR**

(57)     Provided in the present specification is a method for transmitting uplink control information (UCI) in a wireless communication system. More particularly, a method performed by a terminal comprises the steps of: receiving, from a base station, first downlink control information (DCI), wherein the first DCI includes configuration information related to resources for transmitting first UCI and the configuration information indicates, to the terminal, a pre-empted resource by another terminal from among preset resources; determining a reference resource region, which is a range for recognizing the pre-empted resource; and transmitting, to the base station, the first UCI on a residual resource excluding the pre-empted resource from the determined reference resource region.

【FIG. 8】

**Description**

[Technical Field]

The disclosure relates to a wireless communication system and, in particular, to a method for transmitting uplink control information and a device supporting the same.

[Background Art]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

[Detailed Description of the Disclosure]

[Technical Problem]

The disclosure aims to provide a method for transmitting uplink control information.

The disclosure also aims to provide a method by which a UE sharing an uplink resource sends uplink control information using a shared channel.

The disclosure also aims to provide a method by which a UE determines uplink control information to be transmitted using a shared channel.

Technical problems to be solved by the disclosure are not limited by the above-mentioned technical problems, and other technical problems which are not mentioned above can be clearly understood from the following description by those skilled in the art to which the disclosure pertains.

[Technical Solution]

The disclosure provides a method for transmitting uplink control information (UCI) in a wireless communication system.

Specifically, the method performed by a user equipment (UE) comprises receiving first downlink control information (DCI) from a base station, the first DCI including configuration information related to resources for transmitting first UCI, the configuration information indicating a preempted resource by another UE among resources pre-configured in the UE, determining a reference resource region which is a range for identifying the preempted resource, and transmitting, to the base station, the first UCI on remaining resources except for the preempted resource in the determined reference resource region.

Further, in the disclosure, determining the reference resource region includes determining a first timing by adding a processing time of the first DCI to a timing of reception of the first DCI, determining a second timing by adding a specific time to the first timing, and determining a time and frequency resource located on a time domain from the first timing to the second timing as the reference resource region.

Further, in the disclosure, the processing time of the first DCI is determined based on at least any one of the UE's capability information, higher layer signaling, and/or a preset value.

Further, in the disclosure, the specific time is determined based on at least any one of higher layer signaling and/or a preset value.

Further, in the disclosure, the preempted resource indicated by the configuration information includes one or more specific symbols.

Further, in the disclosure, when the first UCI is configured to be transmitted on the preempted resource, the preempted resource is dropped, punctured, or rate-matched.

Further, in the disclosure, the method further comprises receiving second DCI for retransmission of the first UCI from the base station and transmitting, to the base station, the first UCI on a resource determined based on the second DCI.

Further, in the disclosure, the method further comprises, when second UCI generated after receiving the second DCI and the first UCI are configured to be transmitted on the same resource, transmitting UCI, determined based on a preset priority, of the first UCI and the second UCI, to the base station, on the same resource.

Further, in the disclosure, when the first UCI is configured to be transmitted on the preempted resource, the first UCI is transmitted on the preconfigured resource.

Further, in the disclosure, a UE transmitting uplink control information (UCI) in a wireless communication system comprises a radio frequency (RF) module for transmitting/receiving a radio signal and a processor functionally connected with the RF module, wherein the processor receives first downlink control information (DCI) from a base station, the first DCI including configuration information related to resources for transmitting first UCI, the configuration information indicating a preempted resource by another UE among resources pre-configured in the UE, determines a reference resource region which is a range for identifying the preempted resource, and transmits, to the base station, the first UCI on remaining resources except for the preempted resource in the determined reference resource region.

Further, in the disclosure, the processor determines a first timing by adding a processing time of the first DCI to a timing of reception of the first DCI, determines a second timing by adding a specific time to the first timing, and determines that a time and frequency resource located on a time domain from the first timing to the second timing is the reference resource region.

Further, in the disclosure, the processing time of the first DCI is determined based on at least any one of the UE's capability information, higher layer signaling, and/or a preset value.

Further, in the disclosure, the specific time is determined based on at least any one of higher layer signaling and/or a preset value.

Further, in the disclosure, the preempted resource indicated by the configuration information includes one or more specific symbols.

Further, in the disclosure, a method for receiving uplink control information (UCI) in a wireless communication system and performed by a base station comprises transmitting first downlink control information (DCI) to a UE, the first DCI including configuration information related to resources for transmitting first UCI, the configuration information indicating a preempted resource by another UE among resources pre-configured in the UE for transmission of the first UCI and receiving, from the UE, first UCI on a resource determined by the configuration information.

[Advantageous Effects]

The disclosure provides the effect of being able to efficiently use a resource by providing a method for transmitting uplink control information (UCI).

The disclosure also provides the effect of being able to efficiently use a UE by providing a method by which a UE sharing an uplink resource transmits uplink control information using a shared channel.

The disclosure also provides the effect of being able to transmit prioritized uplink control information by providing a method by which a UE determines uplink control information to be transmitted, using a shared channel.

Effects which may be obtained from the disclosure are not limited by the above effects, and other effects that have not been mentioned may be clearly understood from the following description by those skilled in the art to which the disclosure pertains.

[Description of Drawings]

The accompanying drawings, which are included to provide a further understanding of the disclosure and constitute a part of the detailed description, illustrate embodiments of the disclosure and together with the description serve to explain the principle of the disclosure.

FIG. 1 illustrates an example of an overall structure of an NR system to which a method proposed in the disclosure may be applied.

FIG. 2 illustrates the relation between an uplink frame and a downlink frame in a wireless communication system to which a method proposed in the disclosure may be applied.

FIG. 3 illustrates an example of a resource grid supported in a wireless communication system to which a method proposed in the disclosure may be applied.

FIG. 4 illustrates examples of a resource grid per antenna port and numerology to which a method proposed in the disclosure may be applied.

FIG. 5 illustrates an example of a self-contained slot structure to which a method proposed in the disclosure may be applied.

FIG. 6 is a flowchart illustrating an example in which signaling to indicate a preempted resource is performed.

FIG. 7 is a view illustrating a method for handling UCI piggyback for dynamic resource sharing.

FIG. 8 is a flowchart illustrating a method of operation of a UE performing a method for transmitting UCI as proposed in the disclosure.

FIG. 9 is a flowchart illustrating a method of operation of a base station performing a method for receiving UCI as proposed in the disclosure.

FIG. 10 is a block diagram illustrating a configuration of a wireless communication device to which methods as proposed in the disclosure are applicable.

FIG. 11 is a block diagram illustrating another example configuration of a wireless communication device to which methods proposed according to the disclosure are applicable.

[Mode for Disclosure]

Reference will now be made in detail to embodiments of the disclosure, examples of which are illustrated in the accompanying drawings. A detailed description to be disclosed below together with the accompanying drawing is to describe exemplary embodiments of the disclosure and not to describe a unique embodiment for carrying out the disclosure. The detailed description below includes details to provide a complete understanding of the disclosure. However, those skilled in the art know that the disclosure can be carried out without the details.

In some cases, in order to prevent a concept of the disclosure from being ambiguous, known structures and devices may be omitted or illustrated in a block diagram format based on core functions of each structure and device.

In the disclosure, a base station (BS) means a terminal node of a network directly performing communication with a terminal. In the disclosure, specific operations described to be performed by the base station may be performed by an upper node of the base station, if necessary or desired. That is, it is obvious that in the network consisting of multiple network nodes including the base station, various operations performed for communication with the terminal can be performed by the base station or network nodes other than the base station. The 'base station (BS)' may be replaced with terms such as a fixed station, Node B, evolved-NodeB (eNB), a base transceiver system (BTS), an access point (AP), gNB (general NB), and the like. Further, a 'terminal' may be fixed or movable and may be replaced with terms such as user equipment (UE), a mobile station (MS), a user terminal (UT), a mobile subscriber station (MSS), a subscriber station (SS), an advanced mobile station (AMS), a wireless terminal (WT), a machine-type communication (MTC) device, a machine-to-machine (M2M) device, a device-to-device (D2D) device, and the like.

In the following, downlink (DL) means communication from the base station to the terminal, and uplink (UL) means communication from the terminal to the base station. In the downlink, a transmitter may be a part of the base station, and a receiver may be a part of the terminal. In the uplink, the transmitter may be a part of the terminal, and the receiver may be a part of the base station.

Specific terms used in the following description are provided to help the understanding of the disclosure, and may be changed to other forms within the scope without departing from the technical spirit of the disclosure.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), non-orthogonal multiple access (NOMA), and the like. The CDMA may be implemented by radio technology such as universal terrestrial radio access (UTRA) or CDMA2000. The TDMA may be implemented by radio technology such as global system for mobile communications (GSM)/general packet radio service (GPRS)/enhanced data rates for GSM evolution (EDGE). The OFDMA may be implemented as radio technology such as IEEE 802.11(Wi-Fi), IEEE 802.16(WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using E-UTRA, adopts the OFDMA in the downlink and the SC-FDMA in the uplink. LTE-A (advanced) is the evolution of 3GPP LTE.

5G new radio (NR) defines enhanced mobile broadband (eMBB), massive machine type communications (mMTC), ultra-reliable and low latency communications (URLLC), and vehicle-to-everything (V2X) depending on usage scenarios.

The 5G NR standards are divided into standalone (SA) and non-standalone (NSA) depending on co-existence between the NR system and the LTE system.

5NR supports various subcarrier spacings and supports CP-OFDM on downlink and CP-OFDM and DFT-s-OFDM (SC-OFDM) on uplink.

Embodiments of the disclosure may be supported by standard documents disclosed in at least one of IEEE 802, 3GPP, and 3GPP2 which are the wireless access systems. That is, steps or parts in the embodiments of the disclosure which are not described to clearly show the technical spirit of the disclosure may be supported by the standard documents. Further, all terms described in this document may be described by the standard document.

3GPP LTE/LTE-A/New RAT (NR) is primarily described for clear description, but technical features of the disclosure are not limited thereto.

As used herein, the phrase "A and/or B" may have the same meaning as "including at least one of A or B."

**Definition of terms**

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

Numerology: corresponds to one subcarrier spacing in the frequency domain. Different numerologies may be defined by scaling the reference subcarrier spacing with the integer N.

[NR: NR radio access or New Radio

**Overview of system**

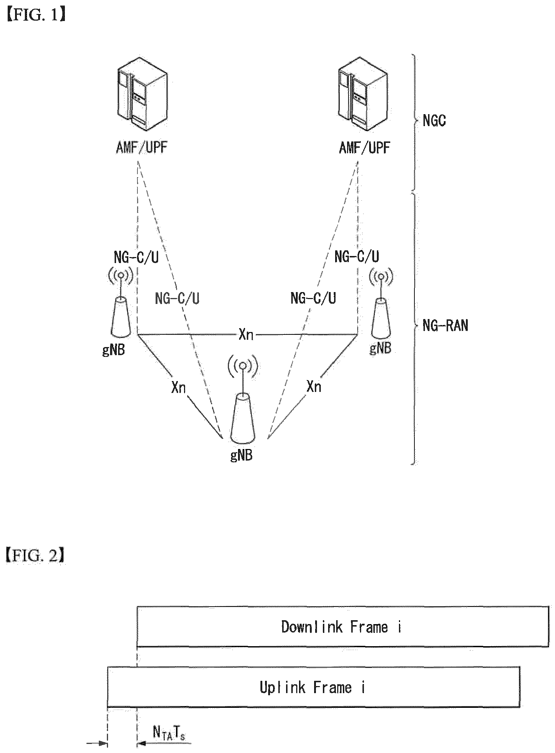

FIG. 1 illustrates an example of an overall structure of an NR system to which a method proposed in the disclosure may be applied.

Referring to FIG. 1, an NG-RAN is configured with an NG-RA user plane (new AS sublayer/PDCP/RLC/MAC/PHY) and gNBs which provide a control plane (RRC) protocol end for a user equipment (UE).

The gNBs are interconnected through an Xn interface.

The gNBs are also connected to an NGC through an NG interface.

More specifically the gNBs are connected to an access and mobility management function (AMF) through an N2 interface and to a user plane function (UPF) through an N3 interface.

**NR(New Rat) Numerology and frame structure**

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15\,[\text{kHz}]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10m^s$. The radio frame is composed of ten subframes each having a section of $T_{sf} = (\Delta f_{max} N_f/1000) \cdot T_s = 1$ ms. In this case, there may be a set of UL frames and a set of DL frames.

FIG. 2 illustrates the relation between an uplink frame and a downlink frame in a wireless communication system to which a method proposed in the disclosure may be applied.

As illustrated in FIG. 2, uplink frame number i for transmission from a user equipment (UE) shall start $T_{TA} = N_{TA}T_s$ before the start of a corresponding downlink frame at the corresponding UE.

Regarding the numerology $\mu$, slots are numbered in increasing order of $n_s^\mu \in \left\{0,..., N_{subframe}^{slots,\mu} - 1\right\}$ within a subframe and are numbered in increasing order of $n_{s,f}^\mu \in \left\{0,..., N_{frame}^{slots,\mu} - 1\right\}$ within a radio frame. One slot consists of consecutive OFDM symbols of $N_{symb}^\mu$, and $N_{symb}^\mu$ is determined depending on a numerology used and slot configuration. The start of slots $n_s^\mu$ in a subframe is aligned in time with the start of OFDM symbols $n_s^\mu N_{symb}^\mu$ in the same subframe.

Not all UEs are able to transmit and receive at the same time, and this means that not all OFDM symbols in a downlink slot or an uplink slot are available to be used.

Table 2 shows the number of OFDM symbols per slot for the normal CP in numerology $\mu$, and Table 3 shows the number of OFDM symbols for the extended CP in numerology $\mu$.

[Table 2]

| $\mu$ | Slot configuration | | | | | |
|---|---|---|---|---|---|---|
| | 0 | | | | | |
| | $N_{symb}^\mu$ | $N_{frame}^{slots,\mu}$ | $N_{subframe}^{slots,\mu}$ | $N_{symb}^\mu$ | $N_{frame}^{slots,\mu}$ | $N_{subframe}^{slots,\mu}$ |
| 0 | 14 | 10 | 1 | 7 | 20 | 2 |
| 1 | 14 | 20 | 2 | 7 | 40 | 4 |
| 2 | 14 | 40 | 4 | 7 | 80 | 8 |
| 3 | 14 | 80 | 8 | - | - | - |
| 4 | 14 | 160 | 16 | - | - | - |
| 5 | 14 | 320 | 32 | - | - | - |

[Table 3]

| $\mu$ | Slot configuration | | | | | |
|---|---|---|---|---|---|---|
| | 0 | | | 1 | | |
| | $N_{symb}^\mu$ | $N_{frame}^{slots,\mu}$ | $N_{subframe}^{slots,\mu}$ | $N_{symb}^\mu$ | $N_{frame}^{slots,\mu}$ | $N_{subframe}^{slots,\mu}$ |
| 0 | 12 | 10 | 1 | 6 | 20 | 2 |
| 1 | 12 | 20 | 2 | 6 | 40 | 4 |
| 2 | 12 | 40 | 4 | 6 | 80 | 8 |
| 3 | 12 | 80 | 8 | - | - | - |
| 4 | 12 | 160 | 16 | - | - | - |
| 5 | 12 | 320 | 32 | - | - | - |

**NR Physical Resource**

In relation to physical resources in the NR system, an antenna port, a resource grid, a resource element, a resource block, a carrier part, etc. may be considered.

Hereinafter, the above physical resources that can be considered in the NR system are described in more detail.

First, in relation to an antenna port, the antenna port is defined so that a channel over which a symbol on an antenna port is conveyed can be inferred from a channel over which another symbol on the same antenna port is conveyed. When large-scale properties of a channel over which a symbol on one antenna port is conveyed can be inferred from a channel over which a symbol on another antenna port is conveyed, the two antenna ports may be regarded as being in a quasi co-located or quasi co-location (QC/QCL) relation. In this case, the large-scale properties may include at least one of delay spread, Doppler spread, frequency shift, average received power, and received timing.

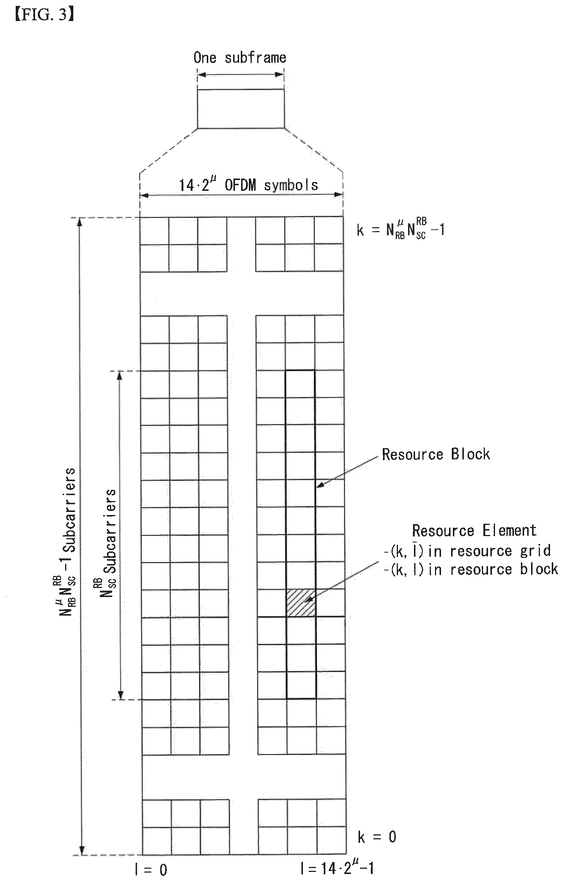

FIG. 3 illustrates an example of a resource grid supported in a wireless communication system to which a method proposed in the disclosure may be applied.

Referring to FIG. 3, a resource grid consists of $N_{\mathrm{RB}}^{\mu} N_{\mathrm{sc}}^{\mathrm{RB}}$ subcarriers on a frequency domain, each subframe consisting of 14 x $2^u$ OFDM symbols, but the disclosure is not limited thereto.

In the NR system, a transmitted signal is described by one or more resource grids, consisting of $N_{\mathrm{RB}}^{\mu} N_{\mathrm{sc}}^{\mathrm{RB}}$ subcarriers, and $2^{\mu} N_{\mathrm{symb}}^{(\mu)}$ OFDM symbols, where $N_{\mathrm{RB}}^{\mu} \le N_{\mathrm{RB}}^{\mathrm{max},\mu}$. $N_{\mathrm{RB}}^{\mathrm{max},\mu}$ denotes a maximum transmission bandwidth and may change not only between numerologies but also between uplink and downlink.

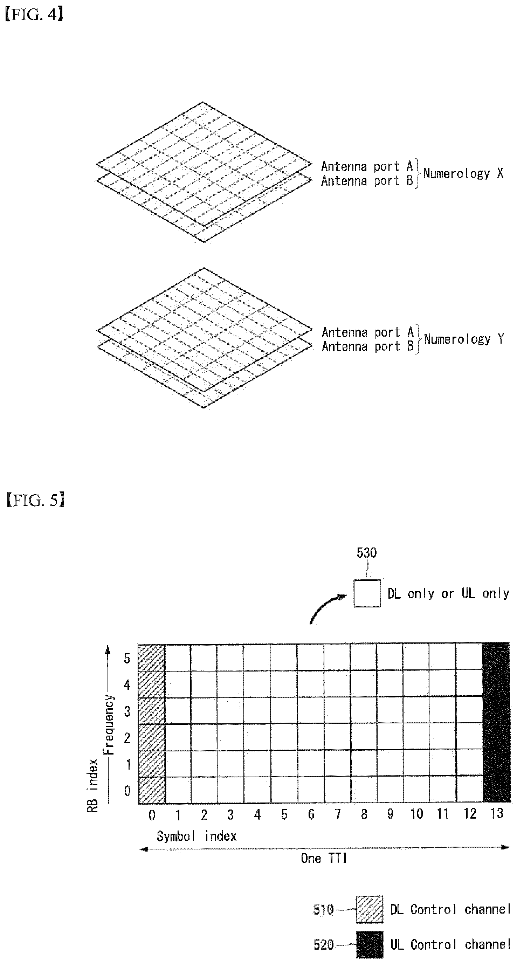

In this case, as illustrated in FIG. 4, one resource grid may be configured per numerology $\mu$ and antenna port p.

FIG. 4 illustrates examples of a resource grid per antenna port and numerology to which a method proposed in the disclosure may be applied.

Each element of the resource grid for the numerology $\mu$ and the antenna port p is called a resource element and is uniquely identified by an index pair $(k,\bar{l})$, where $k = 0,..., N_{\mathrm{RB}}^{\mu} N_{\mathrm{sc}}^{\mathrm{RB}} - 1$ is an index on a frequency domain, and $\bar{l} = 0,...,2^{\mu} N_{\mathrm{symb}}^{(\mu)} - 1$ refers to a location of a symbol in a subframe. The index pair $(k,l)$ is used to refer to a resource element in a slot, where $l = 0,...,N_{\mathrm{symb}}^{\mu} - 1$.

The resource element $(k,\bar{l})$ for the numerology $\mu$ and the antenna port p corresponds to a complex value $a_{k,\bar{l}}^{(p,\mu)}$. When there is no risk for confusion or when a specific antenna port or numerology is not specified, the indexes p and $\mu$ may be dropped, and as a result, the complex value may be $a_{k,\bar{l}}^{(p)}$ or $a_{k,\bar{l}}$.

Further, a physical resource block is defined as $N_{\mathrm{sc}}^{\mathrm{RB}} = 12$ consecutive subcarriers in the frequency domain. In the frequency domain, the physical resource blocks are numbered 0 to $N_{\mathrm{RB}}^{\mu} - 1$. In this case, the relationship between the physical resource block number $n_{\mathrm{PRB}}$ in the frequency domain and the resource elements $(k,l)$ is given as in Equation 1.

[Equation 1]

$$n_{\mathrm{PRB}} = \left\lfloor \frac{k}{N_{\mathrm{sc}}^{\mathrm{RB}}} \right\rfloor$$

Further, in connection with the carrier part, the UE may be configured to receive or transmit using only a subset of resource grid. In this case, a set of resource blocks configured to be received or transmitted by the UE is numbered 0 to $N_{\mathrm{URB}}^{\mu} - 1$ in the frequency domain.

**Self-contained slot structure**

To minimize data transmission latency in TDD systems, the fifth-generation new RAT (NR) considers a self-contained slot structure as shown in FIG. 5.

In other words, FIG. 5 is a view illustrating an example self-contained slot structure to which a method proposed in the disclosure is applicable.

In FIG. 5, the hatching area 510 indicates the downlink control area, and the solid dark area 520 indicates the uplink control area.

The uncolored area may be used for downlink data transmission or for uplink data transmission.

Such structure features that DL transmission and UL transmission are sequentially performed in one slot and, in one slot, DL data may be sent or a UL Ack/Nack may be transmitted/received as well.

Such slot may be defined as a 'self-contained slot.'

In other words, by the slot structure, the base station may reduce the time taken to retransmit data to the UE when a data transmission error occurs, thereby minimizing the latency of the final data transmission.

In the self-contained slot structure, the base station and the UE require a time gap for switching from the transmission to reception mode or from the reception to transmission mode.

To that end, in the slot structure, some OFDM symbols of the time that DL switches to UL are set as a guard period (GP).

As more and more communication devices need larger communication capacity, a need is surfacing for mobile broadband communication enhanced over conventional radio access technology.

Massive machine type communication (MTC) becomes a major issue as considered for next-generation communication, which connects multiple devices and things anytime, anywhere to provide various services.

Also under discussion is a communication system design considering services/UEs sensitive to reliability and latency.

As such, there is ongoing discussion for next-generation radio access technology considering, e.g., enhanced mobile broadband communication, massive MTC, and ultra-reliable and low latency communication (URLLC), which is referred to herein as new RAT for convenience.

Further, the next-generation system as used herein may be denoted 5G/NR.

In the legacy system, the scheduling unit of the resource used by the UE is fixed to a transmission time interval (TTI) with one size and, only in a limited context, such as transmission of an SRS (sounding reference signal), transmission duration may be varied within one TTI.

However, in the next-generation system, the UE may flexibly be allocated time/frequency resources with various sizes, rather than a fixed TTI length, by the base station.

Further, since the latency requirement differs depending on the service used by, or provided to, the UEs, the capability required for the UE, the type of resource provided, and the signaling of the base station may be varied.

Accordingly, the next-generation system needs consideration of a method in which various UEs use one time/frequency resource.

Described below is a method and procedure by which UEs share and use resources, dynamically or semi-statically, for the traffic with different lengths or QoS (quality of service) requirements.

In the next-generation system, the base station may allocate a time/frequency resource to the UE more flexibly than in the legacy system and, without limitations to the frequency domain of the UE, allocate an individual bandwidth part (BWP), as the system bandwidth, to the UE.

Signaling for receiving an allocation of a resource may differ depending on the services with different QoSs used by the UEs.

For another UE, or even for one UE, the system needs to prioritize a specific service of traffic considering service-to-service requirements.

For a service requiring short latency and high reliability, the base station needs to more dynamically control the resources of the UEs that in the legacy system.

As compared with the legacy system, 5G/NR simultaneously supports various services, and one UE may be required to simultaneously support various services.

Accordingly, if the QoS of a service is classified only at a level not less than L2, it may be inappropriate for services requiring very short latency.

To support such service, L1 needs to be able to perform different operations depending on QoSs, and this may mean that L1 also needs a scheme in which the UE may discern the QoS requirement of each packet.

As L1 performs the operation according to the QoS, the UE may support data with various low QoS requirements while processing urgent data with a short interruption and minimum resources.

In the next-generation system, a preemption indication may be used for a dynamic resource sharing of downlink transmission.

In this case, the preemption indication may be transmitted using group-common downlink control information (DCI).

The DCI-based preemption indication is a method in which the base station arbitrarily punctures other transmission for transmission by a specific UE and notifies the victim UE (vUE) whether subsequent puncturing is performed or the likelihood of puncturing so that the vUE by itself may compensate for any loss due to puncturing.

However, in uplink (UL) transmission, different UEs are the entities of transmission and, thus, an additional consideration is required in performing puncturing at the time of transmission, as in the downlink (DL).

To that end, an uplink dynamic sharing via a transmission scheme or additional signaling (e.g., halting message, or superposition transmission) for the vUE is taken into consideration.

The disclosure proposes a method for addressing the issue that may arise when UEs use additional signaling or transmission scheme to use dynamic uplink sharing.

As compared with downlink resource sharing, uplink resource sharing is of more significance.

For example, in the case of downlink, the network may prioritize URLLC traffic, e.g., by increasing power or increasing use of resources.

However, in the case of uplink, the operation in which the network increases power or increases use of resources is limited due to the UE's power limitations.

In particular, it may be difficult to avoid interference from the UE linked to another cell.

Accordingly, methods for effectively performing uplink multiplexing are critical.

Further, in the normal URLLC use case, uplink traffic may be more critical (e.g., sensor data report).

Thus, schemes for effectively performing URLLC uplink transmission may be said to be very important.

Although in the disclosure, multiplexing for the UE's PUSCH and PUCCH transmission is described, it is obvious that it is overall applicable to PUSCH transmission using a configured grant, but not only dynamic grant PUSCH transmission generally used by the UE, PUCCH transmission by semi-static/dynamic signaling, uplink transmission upon random access, and/or transmission used in the UE's wireless communication system including PDSCH.

In the next-generation system, various reference time units may be assumed/used in transmitting/receiving a physical channel depending on applications or kinds of traffic.

The reference time may be a basic unit for scheduling a specific physical channel, and the reference time may be varied depending on, e.g., the number of the symbols comprising the scheduling unit and/or the subcarrier spacing.

In the embodiments described herein, a slot and non-slot is used as the reference time unit for ease of description.

The slot may be the basic scheduling unit used in common data traffic (e.g., eMBB (enhanced mobile broadband).

The non-slot may have a smaller time interval than the slot in the time domain and may be the basic scheduling unit used in traffic or a communication scheme for a special purpose.

In this case, as an example of the special purpose of traffic or communication scheme, there may be URLLC (ultra-reliable and low latency communication) or unlicensed band or millimeter wave.

However, this is merely an example, and it is obvious that it may apply even where the eMBB transmits/receives a physical channel based on the non-slot or physical channel transmission/reception is performed based on URLLC or other communication schemes.

As set forth herein, signaling transferred from the base station to the UE for multiplexing may be carried out by various methods.

For example, TPC for power control, UL grant which is a scheduling message, group common DCI, and/or new signaling which does not exist may be used for multiplexing.

It is obvious that the content of the disclosure is not limited to a specific signaling method and that the whole or some of the disclosure is applicable to any signaling unless they are mutually exclusive.

A method for designing signaling transferred from the base station to the UE for multiplexing is described below.

Prior to describing the method, the impacted resource indication (IRI) of the disclosure may play a role to indicate the preempted resource.

In the disclosure, vUE stands for victim UE and means a UE that is disabled to transmit the data that the UE originally intends to transmit, by the preempted resource received from the base station.

pUE stands for preempting UE and means a UE that performs uplink transmission using the resource that the vUE intended to use for transmission, based on the resource scheduling received from the base station.

Preempted resource refers to a resource used for transmission by the pUE. The vUE is required to perform uplink transmission using the other resources than the resource used for transmission by the pUE.

In other words, the preempted resource is a preempted resource for pUE transmission, and the vUE is unable to perform uplink transmission using the preempted resource.

Accordingly, preempted transmission, as used herein, means that a preconfigured resource of transmission by the vUE is configured as a preempted resource so that uplink transmission by the vUE is not performed.

(Embodiment 1) - Design of Impacted resource indication

There is needed a method for the base station to dynamically notify the vUE of the preempted resource so as to allow the pUE to secure a resource for use.

A specific method for designing signaling for performing such method is described below.

(Embodiment 1-1)

In this method, as a signaling for the base station to notify the vUE of the preempted resource, a group common signaling is used.

Specifically, a signaling, such as a downlink preemption indication or dynamic slot format indicator (SFI), may be reused.

In this case, the uplink preemption indication is identical in signaling form to the downlink preemption indication, but may use a different reference resource.

(Embodiment 1-2)

This is a method of using a UE-specific signaling.

For example, this may be to reuse the signaling of the UL grant.

By use of this method, the UE-specific signaling may be used as the IRI for transfer to the vUE, and the pUE may be fundamentally prevented from erroneously receiving the IRI.

Thus, where the UE-specific signaling is used, a resource allocation (RA) which is needed for the vUE to recover the preempted transmission may be contained in the IRI, so that signaling overhead may be reduced.

Meanwhile, in the case of group common signaling, it may be useful to indicate the resources allocated to multiple UEs and/or to indicate the non-PUSCH resource.

In this case, the non-PUSCH resource may correspond to the resource of the PUSCH allocated as a configured grant or the resource of SRS transmission.

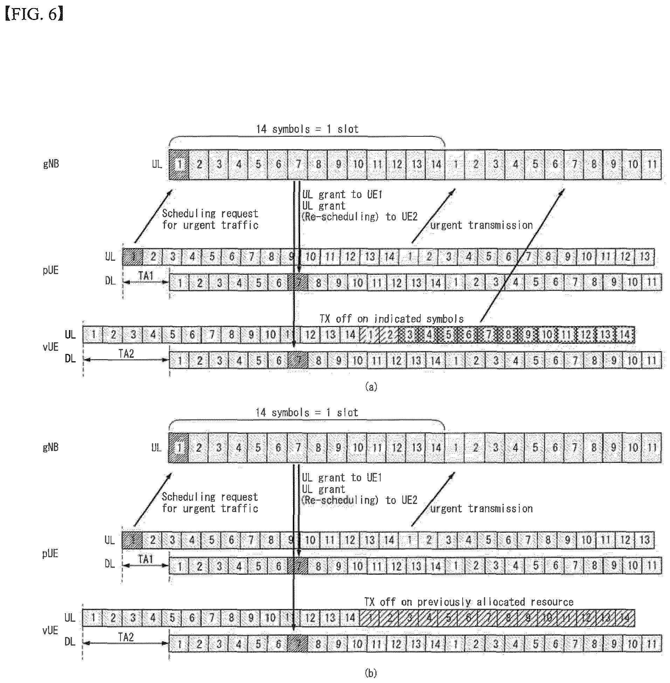

FIG. 6 is a flowchart illustrating an example in which signaling to indicate a preempted resource is performed.

Referring to FIG. 6, unless there is an empty resource when the pUE for performing urgent transmission transmits a scheduling request to the base station, the base station may cancel or postpone the pre-allocated transmission of the other UE (i.e., the vUE) for the pUE's transmission.

Specifically, the base station may transmit a UL grant to each of the pUE and the vUE, thereby allocating a resource necessary for urgent transmission to the pUE, regardless of the vUE.

In this case, the resource necessary for the pUE's urgent transmission may be said to be the preempted resource.

Accordingly, the vUE may drop, cancel, and/or postpone the transmission of the transport block (TB) overlapping the urgent transmission of the pUE.

(Embodiment 2) - IRI handing with PDSCH/PUSCH repetition

This regards a method for interpreting the IRI for repetitive transmission of PDSCH and/or PUSCH.

The preempted resource indicated by the IRI may be selected according to the signaling method or information of the IRI.

In this case, the base station may indicate the time/frequency resource index of a specific preempted resource implicitly, rather than explicitly.

For example, the preempted transmission may be implicitly indicated by the transmission closest to the timing of IRI reception, the latest allocated transmission, or the preemption/cancelation of the latest PUSCH scheduled with a specific HARQ ID.

In this case, where the UE uses slot aggregation/repetition for PUSCH (or PDSCH) or PUCCH transmission, the UE may determine that the whole repetitive transmission has been preempted.

This is for simplifying the transmission system.

In other words, it may be assumed that the same preemption region or the same region of canceling the uplink appears over multiple slots.

For example, there may be the case where IRI/preemption message transmission is performed in the resource with slot index k of OFDM symbol n.

In this case, transmission after at least M2 symbols may all be canceled considering the UE's processing time.

Here, M2 may be equal to or smaller than N2+TA or may be a value different from N2. N2 is assumed to be the UE's PDCCH-to-PUSCH delay. In the case of PUCCH, it may be regarded as N1+TA.

Meanwhile, since urgent transmission by the pUE generally has a relatively short transmission duration, it may be assumed that all the long transmission duration repeated for short transmission is preempted.

However, such assumption may deteriorate the system performance.

Accordingly, it may be advantageous to allow a specific one or some transmission alone among one or more repetitive transmissions to be indicated by the IRI and, in this case, the following method may be taken into consideration.

(Embodiment 2-1)

In this method, if the UE receives an IRI for a specific TB, all preconfigured repetitive transmissions are assumed to be preempted.

(Embodiment 2-2)

In this case, the transmission indicated by the IRI may be a specific transmission among one or more preconfigured repetitive transmissions.
For example, this may indicate the first or last transmission alone.
As another example, it may indicate the first or the last, nth transmission or transmission of 1/N.
Specifically, where a total of K repetitive transmissions are present, it may be assumed that the last k (k<K) transmission resource or the last floor (K/2) transmission resource is the preempted resource.

(Embodiment 2-3)

In this case, the transmission indicated by the IRI may indicate the remaining transmissions except for a specific transmission among one or more repetitive transmissions.
As an example, the other transmission resources than the initial transmission may be assumed to be preempted resources, or the other resources than the resource mapped with a specific RV (e.g., 0 or 3) may be assumed to be preempted resources.
In this case, higher reliability may be secured by protecting the self-decodable RV from other transmissions.

(Embodiment 2-4)

As an embodiment for the case where K repetitive transmissions, one or more preempted transmissions among one or more repetitive transmissions may be indicated via the bit information of the IRI.
For example, the bit information of the IRI may be information of ceil(log2(K)) bit or ceil(log2(K(K+1)/2)) bit.

(Embodiment 2-5)

The preempted resource may be indicated as a bitmap by dividing all the resources repeated via N-bit information in addition to the IRI, by N time/frequency domains.

(Embodiment 2-6)

The IRI may be transmitted as uplink scheduling grant of the UE.
Where the UE receives a UL grant for the same HARQ and then, without the NDI (new data indicator) toggled, receives a UL grant before PUSCH transmission (or where the UE receives a UL grant within the N2 time of the prior UL grant), it may be assumed that the previous PUSCH is preempted and/or canceled.
In such a case, the UE is assumed to cancel all prior transmissions as possible.
In other words, the UE is assumed to drop all prior PUSCHs after the N2 (or M2) + TA time, after receiving a new UL grant.

(Embodiment 3) - Reference resource for IRI

The UE receives an IRI signaling and assumes a preempted resource via the IRI signaling.
To assume the preempted resource, a reference resource region in which the preempted resource is included needs to be determined.
In this case, the preempted resource may be determined in different reference resource regions depending on signaling methods and/or received information.
Specifically, in the case of a signaling which may be associated with a TB, as is a UL grant, a previously allocated resource for use in already allocated transmission may become a reference resource.
In other words, the resource for already allocated transmission may become a reference resource.
Further, the UE may assume all or some of the reference resources as preempted resources via additional information.
A specific example for determining a reference resource is described below.

(Embodiment 3-1)

The UE may assume all of the already allocated transmissions of the HARQ entity which is currently active as a reference signal.

Specifically, where the HARQ entity may be specified via the IRI, it may be assumed that only the resource used for already allocated transmission of the HARQ entity is used as a reference resource.

(Embodiment 3-2)

The UE may assume the time and/or frequency resources from the timing of reception of the IRI to the time when the next PDCCH monitoring is performed, as a reference signal.

(Embodiment 3-3)

This is a method in which the UE determines a reference resource based on the timing of reception of IRI and the processing time.

In other words, this is a method for determining a reference resource to which the IRI received by the UE may apply.

Specifically, when the timing of reception of the IRI by the UE is T, and the time necessary for IRI processing is P, as many time and/or frequency resources as [T+P, T+P+K] may be determined to be the reference resource.

That is, the UE may assume that the time (T+P) of adding the time (processing time, P) taken to process the DCI to the time T of reception of the DCI including the IRI is the start time for determining a reference region.

The time and/or frequency resource in the time (T+P+K) region corresponding to the sum of the start time and a specific time k, with respect to the start time, may be determined to be the reference resource.

Here, K may be a value received via higher layer signaling from the base station or may be a preset value.

In this case, P may be a value received via higher layer signaling from the base station, may be a value included in the UE's capability/category, or may be a preset value.

In a specific example of such embodiment, the UE may receive the DCI including the IRI. In this case, the IRI may indicate the second, third, seventh symbols.

The UE which has received the DCI takes the sum of the timing of reception of the DCI and the time of interpretation of the DCI as a start time and determines that as many time and/or frequency resources, in the time domain, as the sum of the start time and a specific time is the reference resource.

Next, the UE may assume that the resources corresponding to the second, third, seventh symbols, from the start time of the reference resource, are preempted resources.

The UE may transmit UL data to the base station using the other resources than the preempted resources.

(Embodiment 4) - Non-grant-based UL resource pre-emption

As a UL resource occupied by the vUE, there may be a grant-based PUSCH.

Further, other UL resources, e.g., SPS, SRS, PUCCH resources and/or configured grant PUSCH, may occupy the UL resources.

The IRI may indicate the resources occupied by such transmissions and, in this case, the vUE may stop transmission of the SPS and SRS in the corresponding region.

Considering the design of IRI signaling, a UE-specific signaling, particularly, a preempted resource indication via a UL grant needs to indicate the preempted resource via HARQ information or RA information. Thus, time/frequency resources which may be indicated are limited.

In particular, when HARQ information is used, only previously allocated PUSCH resources may be configured as preempted resources. Thus, it may be difficult to apply to non-grant-based resources, such as PUCCH and SRS.

Therefore, the following embodiment may be taken into consideration as a method for configuring a preempted resource in the non-grant-based resource.

(Embodiment 4-1)

The base station may support multiple preempted resource indication signalings to support uplink dynamic sharing.

For example, a preemption indication via a UL grant and a preemption indication via group common signaling may be simultaneously supported.

(Embodiment 4-2)

Where the base station supports multiple signalings, the type of the preempted resource displayable by each signaling may differ.

For example, preemption for a previously allocated PUSCH may be indicated via UE-specific signaling.

Further, a preemption indication for the SRS, PUCCH, or configured grant PUSCH may be indicated, via a different signaling (e.g., group common signaling) than the UE-specific signaling, based on the absolute time-domain index or a specific reference region.

Use of such embodiments is useful to indicate the preempted resource for the resource that may be difficult to indicate by the UL grant.

Further, it may reduce the signaling overhead in indicating the preempted resource for the UL resource that may be simultaneously allocated to multiple UEs, such as the configured grant.

If the above-described embodiments 1 to 4 are used, other transmission of resource which is being transmitted or previously allocated for the UE to transmit urgent traffic in the next-generation system needs to be used and, at this time, the pre-allocated uplink transmission for some UE may be dynamically varied or canceled. During this course, collision with the existing transmission and a lowering in performance of the existing transmission may be minimized.

For the base station to display the time/frequency position of the resource preempted to the UE, the UE and the base station may assume the same reference resource, and the base station may indicate some region of the reference resource as the preempted resource, via downlink control information (via IRI).

In this case, only the resource that the UE may alter via downlink control information may be determined to be the reference resource by considering the processing time necessary for receiving the UE's downlink control information so as to determine the reference resource.

This may present the effect of being able to reduce control signaling overhead.

Described below is a method that transmits uplink control information (UCI) along with user data, when the uplink resources used by UEs using dynamic signaling are dynamically varied, according to the disclosure.

Since multiple UEs, not a single base station, are the entities for transmission in uplink transmission, an additional signaling is needed for two UEs to share one resource.

Further, unlike in downlink transmission, in uplink transmission, control information may be transferred together and, thus, the reliability of control information needs to be additionally considered.

In particular, although transmission by the pUE is critical in light of uplink, the UCI of the vUE may be more critical in light of downlink.

Described below are various methods of a signaling transferred from the base station to the UE so that the UE dynamically shares the uplink resource.

Specifically, this regards the method of transmitting the UCI, which is to be transmitted on the preconfigured resource to the vUE, in the case where a specific resource pre-configured in the vUE by the above-described embodiments 1 to 4 is preempted.

(Embodiment 5) - Overall procedure of UCI piggybacking with UL dynamic sharing

Where the UE supports uplink dynamic sharing, the transmission resource of the UE may be dynamically varied.

For example, some UE may receive information for the preempted resource via a specific signaling transmitted from the base station and may puncture, rate-match, and/or drop PUSCH transmission on the corresponding preempted resource.

Further, the UE may receive a new UL grant for the same TB before completing transmission of some PUSCH, from the base station, and may perform rescheduling to move the transmission to other PUSCH resource.

In other words, the UE may regard such a UL grant or the specific signaling as the preemption indication (PI) indicating the preempted resource and alter, e.g., the transmission time for the PUSCH transmission allocated to the preempted resource.

At this time, in the case of PUSCH transmission, ambiguity due to the change in transmission time may be removed by maintaining the HARQ information.

However, in the case of the UCI transmitted on the PUSCH, the UCI has a close relationship with the PUCCH resource at the time of transmission of the PUSCH and, thus, the UCI which is to be sent may be varied depending on the change in the transmission time of the PUSCH.

In this case, there is needed a method for compensating for the UCI at the prior PUSCH transmission time, which has not been transmitted.

Further, where all of the PUSCH resources are canceled partially, not wholly, some resources canceled may be the resource element (RE) where the UCI is transmitted.

In such a case, the other PUSCH resources than the canceled PUSCH resources may be transmitted, but the UCI may not be transmitted.

As such, where the UCI is canceled and/or punctured, the reliability of UCI transmission may be significantly lowered.

Given this, the following methods may be taken into consideration when the PUSCH resource for transmitting the UCI of a specific UE is preempted by PUSCH transmission by another UE.

(Embodiment 5-1)

Transmission of the PUSCH including the UCI may be protected from preemption by other UEs.

In this case, although receiving a preemption indication for the PUSCH transmission from the base station, the UE may not apply it.

Or, upon receiving the preemption indication from the base station, the UE may maintain the prior transmission without assuming puncturing/rescheduling for the symbol where the UCI is transmitted and the symbol where the DM-RS for UCI transmission is transmitted.

Or, where the current budget is smaller than the processing time necessary to transmit the UCI over PUSCH, via a different channel, e.g., PUCCH, i.e., when it is not possible to move the UCI over the PUCCH, the UE may neglect preemption.

Such UCI is limited to UCI which may be piggybacked, and it may be disregarded for the UCI transmitted via, e.g., aperiodic CSI.

Specifically, rescheduling may be performed on, e.g., periodic CSI/semi-persistent CSI piggybacked to the PUSCH, using the same HARQ-ID/NDI in which case it may be postponed for transmission.

In other words, if there is an HARQ ID corresponding to the SPS/grant-free resource, the UE may perform rescheduling using the same.

(Embodiment 5-2)

When the UCI-containing PUSCH transmission is canceled and/or punctured by the base station, the UCI transmission may be a retransmission of the canceled/punctured PUSCH transmission or a carried-over one, i.e., resumed transmission, in the rescheduled resource.

In this case, the UCI transmission on the retransmission resource may be disregarded or, depending on the kind of the UCI, it may be selected with priority.

(Embodiment 5-3)

When the UCI-containing PUSCH transmission is canceled and/or punctured by the base station, the canceled/punctured UCI may be transmitted on the previously allocated PUCCH resource or piggybacked to the PUSCH of other cell.

The above-described operation may be limited as being performed only when the period from the time of reception of the rescheduled DCI to the time of transmission of the UCI using the above-described operation is larger than the period for the UE to process the rescheduled DCI.

This is so intended to allow the rescheduled DCI to meet the processing time necessary for performing PUCCH transmission or piggybacking to other PUSCH.

As an another example, where the UE's resource is rescheduled, all data which are to be transmitted on the PUSCH/PUCCH, including the UCI, may be canceled, and it may be determined whether to transmit the UCI depending on the UL grant of rescheduling.

By so doing, the UCI may be dropped according to the canceled PUSCH/PUCCH, but the ambiguity that arises in the DCI missing case may be reduced.

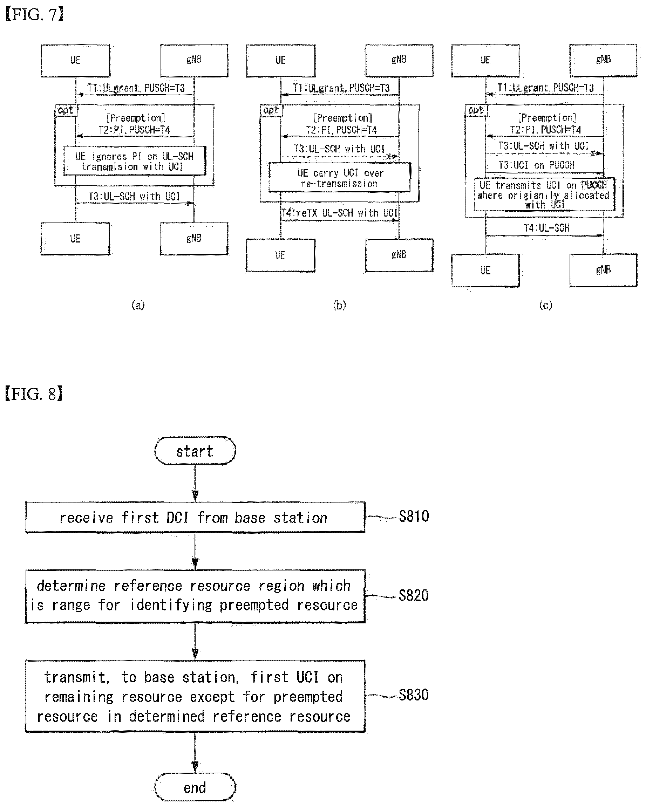

FIG. 7 is a view illustrating a method for handling UCI piggyback for dynamic resource sharing.

In FIG. 7, T1 to T4 may mean some specific times.

Specifically, referring to FIG. 7, the UE may receive an allocation of a PUSCH transmission which is to be transmitted at T3, from the base station at T1.

At this time, the UE may allocate a recovery (re-)transmission resource available at T4 by the preemption indication (PI) transmitted from the base station at T2 (T1<T2<T3<T4).

At this time, where the UCI is transmitted along with the PUSCH transmission at T3, the three methods may be taken into consideration.

First, referring to FIG. 7(a), the UE may disregard the PI and perform PUSCH transmission.

This may be useful for the PI using the group common DCI and allows the UCI, which needs to be transmitted at T3, to be transmitted always at T3, thereby reducing UCI ambiguity.

Next, referring to FIG. 7(b), the UE may transmit the UCI, which should have been transmitted at T3, over the PUSCH (re-)transmission at T4.

Next, referring to FIG. 7(c), the UE may transmit the UCI over the PUCCH, which has been originally allocated, without performing PUSCH transmission at T3 and may re-perform the UL-SCH transmission of T3, at T4.

Similar to the method of FIG. 7(a), the method of FIG. 7(c) allows the UCI, which should be transmitted at T3, to be transmitted always at T3 and may thus reduce UCI ambiguity, but its application may be limited by the PUCCH processing time and the T3-T2 time.

(Embodiment 6) - UCI piggyback on PUSCH transmission on pre-empted resource

This is a method of performing UCI transmission over the PUSCH when the UE supports dynamic resource sharing and/or rescheduling.

(Embodiment 6-1)

Where the transmission of the PUSCH resource including the UCI is punctured, rate-matched, dropped, and/or rescheduled (i.e., preempted) by dynamic resource sharing, the UE may drop the UCI or assume that the UCI has been transmitted.

At this time, the following may be additionally considered for the UCI missing case.

For example, where the UE supports HARQ-ACK pending, the UE may make the dropped HARQ-ACK pending so that the HARQ-ACK feedback which has not been transmitted may be transmitted later.

(Embodiment 6-2)

The UE may assume that the transmission of the PUSCH resource including the UCI is not punctured, rate-matched, dropped, and/or rescheduled by dynamic resource sharing.

In this case, the UE may disregard the PI for the transmission of the PUSCH resource including the UCI.

Specifically, this may apply only to a specific service(s) and/or a specific UCI(s).

As an example, the UE may disregard the PI for transmission of the HARQ-ACK feedback-containing PUSCH, URLLC UCI-containing PUSCH, and/or URLLC HARQ-ACK feedback-containing PUSCH resource.

(Embodiment 6-3)

Where the transmission of the PUSCH resource including the UCI is punctured, rate-matched, dropped, and/or rescheduled by dynamic resource sharing, the UCI transmission may be retransmitted in the recovery (re-)transmission.

(Embodiment 6-3-1)

Specifically, this may apply only to a specific service(s) and/or a specific UCI(s).

That is, this may apply only to other UCI(s) than the specific service(s) and/or specific UCI(s).

As an example, the UE may retransmit only HARQ-ACK feedback, URLLC UCI or URLLC HARQ-ACK feedback in the recovery (re-)transmission.

This may exclude time-sensitive information or bulky information, such as CSI, thereby securing a higher PUSCH reliability in the recovery (re-)transmission.

(Embodiment 6-3-2)

As another example, where only part of preconfigured PUSCH transmissions is punctured/rate-matched so that the UCI transmission is successfully performed, the transmission of the UCI in the recovery (re-)transmission may be omitted.

(Embodiment 6-3-3)

There may be such an occasion that the DCI of recovery (re-)transmission triggers aperiodic CSI transmission, and the triggered CSI configuration is a CSI configuration associated with the CSI which has been included in the PUSCH punctured, rate-matched, dropped, and/or rescheduled before.

In this case, the base station may retransmit the CSI information, which has been generated for prior PUSCH transmission, in the recovery (re-)transmission.

This may reduce the processing time for the recovery (re-)transmission.

Meanwhile, where the prior UL grant is missing, and/or the time for processing the DCI is insufficient, the UE may disregard the rescheduling DCI (retransmission DCI) and stop the PUSCH transmission.

(Embodiment 6-3-4)

There may be such an occasion that the DCI of recovery (re-)transmission triggers aperiodic CSI transmission, and the triggered CSI configuration is a CSI configuration different from the CSI which has been included in the PUSCH punctured, rate-matched, dropped, and/or rescheduled before.

In this case, the CSI information generated for the prior PUSCH transmission is dropped.

That is, the UE assumes that a new CSI is calculated from the base station and transmission is performed according to the rescheduled DCI. The calculation follows normal CSI processing.

(Embodiment 6-3-5)

Where there is a UCI that has occurred at the time of recovery (re-)transmission, the UE may select a specific UCI to be transmitted according to priority, including the prior UCI.

As an example, such information as HARQ-ACK may be transmitted as possible, regardless of the time of occurrence, and such information as CSI may be transmitted with the latest UCI prioritized.

The above-described embodiments 6-3-3 and 6-3-4 are methods that may be used separately whatever ways other UCIs are transmitted in.

(Embodiment 6-4)

Where the transmission of the PUSCH resource including the UCI is punctured, rate-matched, dropped, and/or rescheduled by dynamic resource sharing, the UCI may be transmitted in the originally allocated PUCCH.

(Embodiment 6-4-1)

In particular, where the PI is transferred via a new UL grant so that dynamic resource sharing is performed via rescheduling, the UE may consider PUCCH processing time as well as UL grant processing time so as to determine the feasibility of the rescheduling.

Specifically, there may be such an occasion that the new UL grant transferred at time T1 may indicate the PUSCH resource at time T2 as the preempted resource.

In this case, the UE may regard the PI as feasible only when T2-T1 is larger than the sum of the UL grant processing time and the PUCCH processing time (i.e., only when "T2 - T1 > UL grant processing time + PUCCH processing time").

(Embodiment 6-5)

Where the transmission of the PUSCH resource including the UCI is punctured, rate-matched, dropped, and/or rescheduled by dynamic resource sharing, the UCI may be transmitted over the PUSCH resource allocated to other cell or, to that end, the base station may simultaneously transmit the PUSCH grant of other cell.

The PUSCH selected by such selection may be chosen according to a PUSCH selection rule of UCI piggybacking but, where the selected PUSCH is preempted, the next PUSCH is chosen.

Unless the other cell lacks a piggyback PUSCH, the UCI may be sent over the originally allocated PUCCH.

Under the assumption that the PUSCH transmitted at a different timing in the same cell is selected and piggybacking is performed, the UE may consider the following method to select other PUSCH.

(Embodiment 6-5-1)

If the position of the start symbol of the existing PUSCH is S, the closest PUSCH among the PUSCHs for which the start symbol is S or larger than S, may be selected.

Use of such method enables the fastest recovery of UCI transmission.

(Embodiment 6-5-2)

If the position of the start symbol of the existing PUSCH is S, the PUSCH with the largest resource, among the PUSCHs for which the start symbol is equal to or larger than S and is smaller than S+K, may be selected.

Use of this method may minimize the performance deterioration of PUSCH.

In this case, K may be received by the UE via higher layer signaling or may be a preset value.

(Embodiment 6-5-3)

If the position of the start symbol of the existing PUSCH is S, the PUSCH present in the cell with the smallest cell index, among the PUSCHs for which the start symbol is equal to or larger than S and is smaller than S+K, may be selected.

In this case, K may be received by the UE via higher layer signaling or may be a preset value.

(Embodiment 7) - Priorities of each UCI types

As described above in connection with embodiments 6-1-1, 6-2-1, and 6-3-5, when the UCIs which have been generated simultaneously or at several times are transmitted over one PUSCH, a specific UCI may be dropped to secure the reliability of UL-SCH transmission.

In this case, the priority rule for determining to drop a subordinate UCI is described.

The UCI to be transmitted first may be differentiated by the following criteria.

1. UCI allocated to pre-empted resource (p.UCI) vs. UCI allocated to recovery (re-)transmission (r.UCI)
2. UCI types (n bit HARQ-ACK, CSI part 1, CSI part 2)
3. Service type (high.QoS vs. low.QoS)

Specifically, looking at the priority of the UCIs, the priority may be determined first by the UCI type.

At this time, the HARQ-ACK may have a higher priority than the CSI.

(HARQ-ACK > CSI)

Next, the priority may be determined according to the resource allocated to the preempted/recovery (re-)transmission.

At this time, in the case of HARQ-ACK, the resource allocated to the preempted resource has a higher priority than the resource allocated to the recovery (re-)transmission and, in the case of CSI, the resource allocated to the recovery (re-)transmission may have a higher priority than the resource allocated to the preempted.

(p. HARQ-ACK > r. HARQ-ACK > r. CSI > p.CSI)

Next, the priority may be determined according to the QoS. Specifically, the high.QoS may have a higher priority than the low.Qos.

(high.p.HARQ-ACK > low.p.HARQ-ACK> high.r.HARQ-ACK > low.r.HARQ-ACK > high.r.CSI > low.r.CSI > high.p.CSI > low.p.CSI)

Meanwhile, a method of transmitting the UCI used according to the QoS of UCI may be determined.

For example, if the UCI is critical, puncturing according to the rescheduled DCI may be ignored.

In other words, it may be determined whether to drop or postpone the UCI and whether to disregard the implicit PI via rescheduling DCI depending on the criticality of UCI.

It may be assumed that setting the priority of UCI follows the highest QoS among the UCIs included.

Unless the above-described embodiments 5 to 7 apply, the UE's DL HARQ-ACK feedback is not transferred to the base station or the HARQ-ACK assumption between the base station and the UE is varied, so that HARQ-ACK feedback of other transmission may not be properly transmitted and unnecessary retransmission may occur.

According to the above-described embodiments 5 to 7, in the case where, in the next-generation system, a pre-allocated uplink transmission of some UE is dynamically varied or canceled for the UE to use the resource of other transmission previously allocated or being sent out for transmission of urgent traffic, the performance deterioration of the existing transmission may be minimized by protecting uplink control information from the same or allowing it to be retransmitted.

Further, the operation ambiguity between the base station and the UE may be removed by allowing the base station to be aware of such circumstance even when the uplink control information may not be transferred.

The above-described embodiments or methods may be performed separately or in combination, thereby implementing a method as proposed herein.

FIG. 8 is a flowchart illustrating a method of operation of a UE performing a method for transmitting UCI as proposed in the disclosure.

In other words, FIG. 8 illustrates a method of operation by a UE transmitting a method of transmitting uplink control information (UCI) in a wireless communication system.

First, the UE receives first downlink control information (DCI) from the base station (S810).

At this time, the first DCI may include configuration information related to resources for transmitting first UCI.

The configuration information may indicate a preempted resource by another UE among resources pre-configured in the UE.

The UE determines a reference resource region which is a range for recognizing the preempted resource (S820).

The UE transmits, to the base station, the first UCI on remaining resources except for the preempted resource in the determined reference resource region (S830).

Step S820 may be determining a first time by adding a processing time of the first DCI to a time of reception of the first DCI, determining a second time by adding a specific time to the first time, and determining that a time and frequency resource located on a time domain from the first time to the second time is the reference resource region.

In this case, the processing time of the first DCI may be determined based on at least any one of the UE's capability information, higher layer signaling, and/or a preset value.

In this case, the specific time may be determined based on at least any one of the higher layer signaling and/or a preset value.

The preempted resource indicated by the configuration information included in the first DCI may include one or more specific symbols.

When the first UCI is configured to be transmitted on the preempted resource, the preempted resource may be dropped, punctured, or rate-matched.

In this case, second DCI for retransmission of the first UCI may be received from the base station, and the first UCI may be transmitted to the base station on a resource determined based on the second DCI.

Further, there is such an occasion where the second UCI generated after receiving the second DCI, and the first UCI, are configured to be transmitted on the same resource.

In such a case, UCI, determined based on a preset priority, of the first UCI and the second UCI, may be transmitted to the base station, on the same resource.

Meanwhile, when the first UCI is configured to be transmitted on the preempted resource, the first UCI may be transmitted on the preconfigured resource.

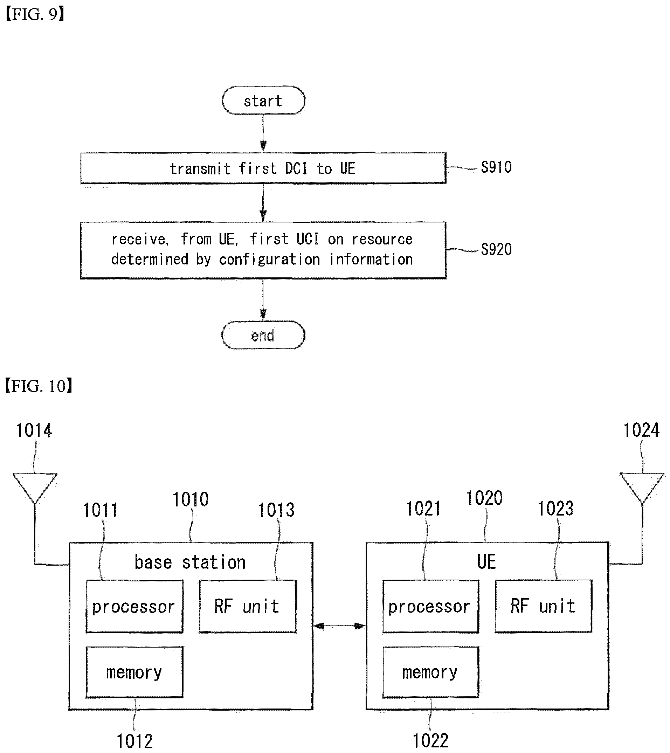

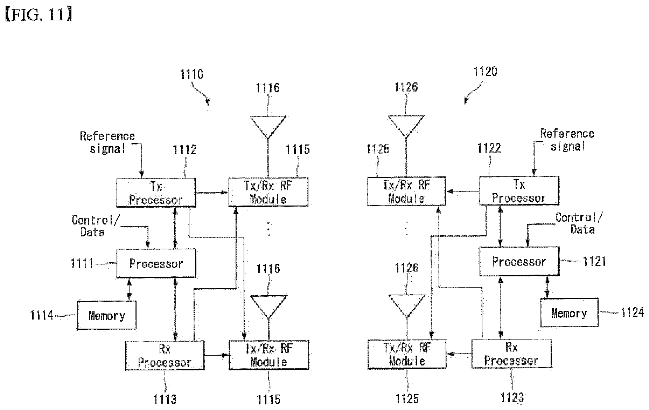

An example in which a method of transmitting uplink control information (UCI) in a wireless communication system as proposed herein is implemented on a UE device is described below with reference to FIGS. 10 and 11.

A UE for transmitting uplink control information (UCI) in a wireless communication system may include a radio frequency (RF) module for transmitting/receiving radio signals and a processor functionally connected with the RF module.

First, the processor of the UE controls the RF module to receive first downlink control information (DCI) from a base station.

In this case, the first DCI includes configuration information related to resources for transmitting first UCI, and the configuration information may indicate a resource preempted by another UE among resources preconfigured in the UE.

The processor controls the RF module to determine a reference resource region which is a range for recognizing the preempted resource.

The processor controls the RF module to transmit, to the base station, the first UCI on remaining resources except for the preempted resource in the determined reference resource.

Further, the processor controls the RF module to determine a first time by adding a processing time of the first DCI to a time of reception of the first DCI, determine a second time by adding a specific time to the first time, and determine that a time and frequency resource located on a time domain from the first time to the second time is the reference resource.

The processing time of the first DCI may be determined based on at least any one of the UE's capability information, higher layer signaling, and/or a preset value.

The specific time may be determined based on at least any one of the higher layer signaling and/or a preset value.

The preempted resource indicated by the configuration information included in the first DCI may include one or more specific symbols.

When the first UCI is configured to be transmitted on the preempted resource, the preempted resource may be dropped, punctured, or rate-matched.

In this case, the processor may control the RF module to receive second DCI for retransmission of the first UCI from the base station and transmit the first UCI to the base station on a resource determined based on the second DCI.

Further, there is such an occasion where the second UCI generated after receiving the second DCI, and the first UCI, are configured to be transmitted on the same resource.

In such a case, the processor may control the RF module to transmit UCI, determined based on a preset priority, of the first UCI and the second UCI, to the base station, on the same resource.

Meanwhile, when the first UCI is configured to be transmitted on the preempted resource, the first UCI may be transmitted on the preconfigured resource.

FIG. 9 is a flowchart illustrating a method of operation of a base station performing a method for receiving UCI as proposed in the disclosure.

In other words, FIG. 9 illustrates a method of operation by a base station receiving uplink control information (UCI) from a UE in a wireless communication system.

First, the base station may transmit first DCI to the UE (S910).

At this time, the first DCI may include configuration information related to resources for transmitting first UCI.

The configuration information may indicate a preempted resource by another UE among resources pre-configured in the UE for transmission of the first UCI.

The base station receives, from the UE, first UCI on a resource determined by the configuration information (S920).

An example in which the operation of receiving uplink control information (UCI) from a UE in a wireless communication system as proposed herein is implemented on a base station device is described below with reference to FIGS. 10 and 11.

A base station for receiving uplink control information (UCI) in a wireless communication system may include a radio frequency (RF) module for transmitting/receiving radio signals and a processor functionally connected with the RF module.

First, the processor of the base station controls the RF module to transmit first downlink control information (DCI) to a UE.

At this time, the first DCI may include configuration information related to resources for transmitting first UCI.

The configuration information may indicate a preempted resource by another UE among resources pre-configured in the UE for transmission of the first UCI.

Next, the processor of the base station controls the RF module to receive, from the UE, first UCI transmitted on a resource determined by the configuration information.

## Overview of Devices to Which Disclosure is Applicable

FIG. 10 illustrates a block diagram of a wireless communication device to which methods proposed by this specification may be applied.

Referring to FIG. 10, a wireless communication system includes an eNB 1010 and multiple user equipments 1020 positioned within an area of the eNB.

Each of the eNB and the UE may be expressed as a wireless device.

The eNB includes a processor 1011, a memory 1012, and a radio frequency (RF) module 1013. The processor 1011 implements a function, a process, and/or a method which are proposed in FIGS. 1 to 9 above. Layers of a radio interface protocol may be implemented by the processor. The memory is connected with the processor to store various information for driving the processor. The RF unit (1013) is connected with the processor to transmit and/or receive a radio signal.

The UE includes a processor 1021, a memory 1022, and an RF unit 1023.

The processor implements a function, a process, and/or a method which are proposed in FIGS. 1 to 9 above. Layers of a radio interface protocol may be implemented by the processor. The memory is connected with the processor to store various information for driving the processor. The RF unit 1023 is connected with the processor to transmit and/or receive a radio signal.

The memories 1012 and 1022 may be positioned inside or outside the processors 1011 and 1021 and connected with the processor by various well-known means.

Further, the eNB and/or the UE may have a single antenna or multiple antennas.

FIG. 11 illustrates another example of the block diagram of the wireless communication device to which the methods proposed in this specification may be applied.

Referring to FIG. 11, a wireless communication system includes an eNB 1110 and multiple user equipments 1120 positioned within an area of the eNB. The eNB may be represented by a transmitting apparatus and the UE may be represented by a receiving apparatus, or vice versa. The eNB and the UE include processors(1111,1121), memories(1114,1124), one or more Tx/Rx radio frequency (RF) modules(1115,1125), Tx processors(1112,1122), Rx processors(1113, 1123) and antennas(1116, 1126). The processor implements a function, a process, and/or a method which are described above. More specifically, a higher layer packet from a core network is provided to the processor 1111 in DL (communication from the eNB to the UE). The processor implements a function of an L2 layer. In the DL, the processor provides multiplexing between a logical channel and a transmission channel and allocation of radio resources to the UE 1120, and takes charge of signaling to the UE. The transmit (TX) processor 1112 implement various signal processing functions for an L1 layer (i.e., physical layer). The signal processing functions facilitate forward error correction (FEC) at the UE and include coding and interleaving. Encoded and modulated symbols are divided into parallel streams, each stream is mapped to an OFDM subcarrier, multiplexed with a reference signal (RS) in a time and/or frequency domain, and combined together by using inverse fast Fourier transform (IFFT) to create a physical channel carrying a time domain OFDMA symbol stream. An OFDM stream is spatially precoded in order to create multiple spatial streams. Respective spatial streams may be provided to different antennas 1116 via individual Tx/Rx modules (or transceivers, 1115). Each Tx/Rx module may modulate an RF carrier into each spatial stream for transmission. In the UE, each Tx/Rx module (or transceiver, 1125) receives a signal through each antenna 1126 of each Tx/Rx module. Each Tx/Rx module reconstructs information modulated with the RF carrier and provides the reconstructed information to the receive (RX) processor 1123. The RX processor implements various signal processing functions of layer 1. The RX processor may perform spatial processing on information in order to reconstruct an arbitrary spatial stream which is directed for the UE. When multiple spatial streams are directed to the UE, the multiple spatial streams may be combined into a single OFDMA symbol stream by multiple RX processors. The RX processor transforms the OFDMA symbol stream from the time domain to the frequency domain by using fast Fourier transform (FFT). A frequency domain signal includes individual OFDMA symbol streams for respective subcarriers of the OFDM signal. Symbols on the respective subcarriers and the reference signal are reconstructed and demodulated by determining most likely signal arrangement points transmitted by the eNB. The soft decisions may be based on channel estimation values. The soft decisions are decoded and deinterleaved to reconstruct data and control signals originally transmitted by the eNB on the physical channel. The corresponding data and control signals are provided to the processor 1121.

UL (communication from the UE to the eNB) is processed by the eNB 1110 in a scheme similar to a scheme described in association with a receiver function in the UE 1120. Each Tx/Rx module 1125 receives the signal through each antenna 1126. Each Tx/Rx module provides the RF carrier and information to the RX processor 1123. The processor 1121 may be associated with the memory 1124 storing a program code and data. The memory may be referred to as a computer readable medium.

The embodiments described above are implemented by combinations of components and features of the disclosure in predetermined forms. Each component or feature should be considered selectively unless specified separately. Each component or feature may be carried out without being combined with another component or feature. Moreover, some components and/or features are combined with each other and can implement embodiments of the disclosure. The order of operations described in embodiments of the disclosure may be changed. Some components or features of one embodiment may be included in another embodiment, or may be replaced by corresponding components or features of another embodiment. It is apparent that some claims referring to a specific claim may be combined with another claim referring to the claims other than the specific claim to constitute the embodiment or add new claims by means of amendment after the application is filed.

Embodiments of the disclosure can be implemented by various means, for example, hardware, firmware, software, or combinations thereof. When embodiments are implemented by hardware, one embodiment of the disclosure can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

When embodiments are implemented by firmware or software, one embodiment of the disclosure can be implemented by modules, procedures, functions, etc. performing functions or operations described above. Software code can be stored in a memory and can be driven by a processor. The memory is provided inside or outside the processor and can exchange data with the processor by various well-known means.

It is apparent to those skilled in the art that the disclosure can be embodied in other specific forms without departing from essential features of the disclosure. Accordingly, the aforementioned detailed description should not be construed as limiting in all aspects and should be considered as illustrative. The scope of the disclosure should be determined by rational construing of the appended claims, and all modifications within an equivalent scope of the disclosure are included in the scope of the disclosure.

[industrial Availability]

Although the disclosure has been shown and described in connection with examples applied to 3GPP LTE/LTE-A/NR systems, the disclosure may also be applicable to other various wireless communication systems than 3GPP LTE/LTE-A/NR systems.

**Claims**

1. A method for transmitting uplink control information (UCI) in a wireless communication system, the method performed by a user equipment (UE), the method comprising:

   receiving first downlink control information (DCI) from a base station,
   wherein the first DCI includes configuration information related to resources for transmitting first UCI,
   wherein the configuration information indicates a preempted resource by another UE among resources pre-configured to the UE;
   determining a reference resource region which is a range for identifying the preempted resource; and
   transmitting, to the base station, the first UCI on remaining resources except for the preempted resource in the determined reference resource region.

2. The method of claim 1, wherein determining the reference resource region includes:

   determining a first timing by adding a processing time of the first DCI to a timing of reception of the first DCI;
   determining a second timing by adding a specific time to the first timing; and
   determining a time and frequency resource located on a time domain from the first timing to the second timing as the reference resource region.

3. The method of claim 2, wherein the processing time of the first DCI is determined based on at least any one of the UE's capability information, higher layer signaling, and/or a preset value.

4. The method of claim 2, wherein the specific time is determined based on at least any one of higher layer signaling and/or a preset value.

5. The method of claim 1, wherein the preempted resource indicated by the configuration information includes one or more specific symbols.

6. The method of claim 1, wherein
   when the first UCI is configured to be transmitted on the preempted resource, the preempted resource is dropped, punctured, or rate-matched.

7. The method of claim 6, further comprising:

   receiving second DCI for retransmission of the first UCI from the base station; and
   transmitting, to the base station, the first UCI on a resource determined based on the second DCI.

8. The method of claim 7, further comprising:

   when second UCI generated after receiving the second DCI and the first UCI are configured to be transmitted on the same resource,
   transmitting UCI, determined based on a preset priority, of the first UCI and the second UCI, to the base station, on the same resource.

9. The method of claim 1, wherein
   when the first UCI is configured to be transmitted on the preempted resource, the first UCI is transmitted on the preconfigured resource.

10. A UE transmitting uplink control information (UCI) in a wireless communication system, the UE comprising:

    a radio frequency (RF) module for transmitting and receiving a radio signal; and
    a processor functionally connected with the RF module, wherein the processor:

       receives first downlink control information (DCI) from a base station,
       wherein the first DCI includes configuration information related to resources for transmitting first UCI,
       wherein the configuration information indicates a preempted resource by another UE among resources pre-configured in the UE;

determines a reference resource region which is a range for identifying the preempted resource; and transmits, to the base station, the first UCI on remaining resources except for the preempted resource in the determined reference resource region.

**11.** The UE of claim 10, wherein the processor:

determines a first timing by adding a processing time of the first DCI to a timing of reception of the first DCI;
determines a second timing by adding a specific time to the first timing; and
determines a time and frequency resource located on a time domain from the first timing to the second timing as the reference resource region.

**12.** The UE of claim 11, wherein the processing time of the first DCI is determined based on at least any one of the UE's capability information, higher layer signaling, and/or a preset value.

**13.** The UE of claim 11, wherein the specific time is determined based on at least any one of higher layer signaling and/or a preset value.

**14.** The UE of claim 10, wherein
the preempted resource indicated by the configuration information includes one or more specific symbols.

**15.** A method for receiving uplink control information (UCI) in a wireless communication system, the method performed by a base station, the method comprising:

transmitting first downlink control information (DCI) to a UE,
wherein the first DCI includes configuration information related to resources for transmitting first UCI,
wherein the configuration information indicates a preempted resource by another UE among resources pre-configured in the UE for transmission of the first UCI; and
receiving, from the UE, first UCI on a resource determined by the configuration information.

【FIG. 1】

【FIG. 2】

【FIG. 3】

One subframe

$14 \cdot 2^{\mu}$ OFDM symbols

$k = N_{RB}^{\mu} N_{SC}^{RB} - 1$

$N_{RB}^{\mu} N_{SC}^{RB} - 1$ Subcarriers

$N_{SC}^{RB}$ Subcarriers

Resource Block

Resource Element
-(k, l̄) in resource grid
-(k, l) in resource block

k = 0

l = 0          l = 14·2$^{\mu}$−1

【FIG. 4】

Antenna port A ⎱
Antenna port B ⎰ Numerology X

Antenna port A ⎱
Antenna port B ⎰ Numerology Y

【FIG. 5】

530

DL only or UL only

One TTI

510 — DL Control channel

520 — UL Control channel

25

【FIG. 6】

(a)

(b)

【FIG. 7】

(a)                    (b)                    (c)

【FIG. 8】

```
            ( start )
                |
                v
  receive first DCI from base station      ~S810
                |
                v
  determine reference resource region which
  is range for identifying preempted resource   ~S820
                |
                v
  transmit, to base station, first UCI on
  remaining resource except for preempted
  resource in determined reference resource   ~S830
                |
                v
             ( end )
```

[FIG. 9]

```
                        ( start )
                            |
                            v
        +-------------------------------------+
        |      transmit first DCI to UE       |------ S910
        +-------------------------------------+
                            |
                            v
        +-------------------------------------+
        | receive, from UE, first UCI on      |
        | resource determined by              |------ S920
        | configuration information           |
        +-------------------------------------+
                            |
                            v
                        (  end  )
```

[FIG. 10]

【FIG. 11】

## INTERNATIONAL SEARCH REPORT

| International application No. |
| --- |
| **PCT/KR2019/004130** |

**A. CLASSIFICATION OF SUBJECT MATTER**

*H04W 72/12(2009.01)i, H04W 72/04(2009.01)i*

According to International Patent Classification (IPC) or to both national classification and IPC

**B. FIELDS SEARCHED**

Minimum documentation searched (classification system followed by classification symbols)
H04W 72/12; H04L 5/00; H04W 72/08; H04W 72/04

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: UCI, DCI, pre-empted resource, reference resource region, processing time, capability information, drop, puncturing, rate matching, retransmission, priority

**C. DOCUMENTS CONSIDERED TO BE RELEVANT**

| Category* | Citation of document, with indication, where appropriate, of the relevant passages | Relevant to claim No. |
| --- | --- | --- |
| X | INSTITUTE FOR INFORMATION INDUSTRY (III). Considerations for UCI for URLLC. R1-1718626. 3GPP TSG RAN WG1 Meeting 90bis. Prague, CZ. 03 October 2017 See pages 1-3; and figure 1. | 15 |
| Y | | 1,5-6,9-10,14 |
| A | | 2-4,7-8,11-13 |
| Y | VIVO. Discussion on handling UL multiplexing of transmissions with different reliability requirements. R1-1801550. 3GPP TSG RAN WG1 Meeting #92. Athens, Greece. 15 February 2018 See sections 2.1-3; and figure 1. | 1,5-6,9-10,14 |
| Y | VIVO. Remaining issues on UL data transmission procedure. R1-1801542. 3GPP TSG RAN WG1 Meeting #92. Athens, Greece. 15 February 2018 See section 2.1. | 6,9 |
| A | SAMSUNG. Multiplexing of UL transmissions with Different Reliability Requirements. R1-1802002. 3GPP TSG RAN WG1 Meeting #92. Athens, Greece. 16 February 2018 See sections 4-5; and figure 3 | 1-15 |
| A | US 2016-0218849 A1 (TEXAS INSTRUMENTS INCORPORATED) 28 July 2016 See paragraphs [0086]-[0088]; and claims 16-20. | 1-15 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 AUGUST 2019 (06.08.2019) | **06 AUGUST 2019 (06.08.2019)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

**INTERNATIONAL SEARCH REPORT**
Information on patent family members

| International application No. |
| --- |
| **PCT/KR2019/004130** |

| Patent document cited in search report | Publication date | Patent family member | Publication date |
| --- | --- | --- | --- |
| US 2016-0218849 A1 | 28/07/2016 | CN 107210861 A | 26/09/2017 |
| | | EP 3248315 A1 | 29/11/2017 |
| | | JP 2018-509041 A | 29/03/2018 |
| | | WO 2016-118928 A1 | 28/07/2016 |

Form PCT/ISA/210 (patent family annex) (January 2015)